Europäisches Patentamt

**European Patent Office**

Office européen des brevets

(19)

(11) Publication number: **0 091 016**
A2

(12) # EUROPEAN PATENT APPLICATION

(21) Application number: **83102897.2**

(22) Date of filing: **23.03.83**

(51) Int. Cl.³: **B 62 J 1/00**

(30) Priority: **07.04.82 IL 65450**

(43) Date of publication of application:
**12.10.83 Bulletin 83/41**

(84) Designated Contracting States:
**AT BE CH DE FR GB IT LI NL SE**

(71) Applicant: **Rabinovitz, Noah**
**7 Gezer St.**
**Tel Aviv(IL)**

(71) Applicant: **Oren, Gideon**
**3 Recanati St.**
**Tel-Aviv(IL)**

(72) Inventor: **Rabinovitz, Noah**
**7 Gezer St.**
**Tel Aviv(IL)**

(72) Inventor: **Oren, Gideon**
**3 Recanati St.**
**Tel-Aviv(IL)**

(74) Representative: **Kehl, Günther, Dipl.-Ing. et al,**
**Patentanwälte GEYER, HAGEMANN & PARTNER**
**Ismaninger Strasse 108 Postfach 860329**
**D-8000 München 86(DE)**

(54) **A bicycle saddle.**

(57) The present invention relates to a new type of saddle for bicycle which eliminates the stress exerted on the muscles and nerves of the anal region. According to the invention, the new type of saddle consists of two spaced parts (1,2) each part being adapted to swing independently around a transverse axis in according with the movement of the pelvis and the hip joints. The transverse axis is constituted by the arms of a tubular T - shaped connector member (6) whose vertical is inserted into the bicycle original frame (7). The new type of saddle can be attached to any existing bicycle used for riding, therapy and ergometry.

F I G. 1

The present invention relates to a bicycle saddle. More particularly the invention relates to a new type of bicycle saddle, to be used for riding, physiotheraphy or the like.

As known, a bicycle is considered a vehicle that has two wheels one behind the other, a steering handle and a saddle seat, being usually propelled by the rider's power. The rider, sitting on the saddle and steering by handle bars attached to the forks, turns a driving sprocket attached to two cranks on which are pedals for his feet. Power is transmitted from this sprocket to a second sprocket on the rear wheel by means of an endless chain running over both sprockets. During the riding of a bicycle great pressure and stress is exerted by the saddle on the muscles and nerves of the anal region and this may cause physical damage to the above mentioned area upon extended bicycle riding.

Although the saddle is probably the most important part of the bicycle from the point of view of a rider, only small changes or improvements, can be found in the history of the bicycle. Actually all these changes or improvements, relate to the type of material from which the saddle was made such as leather, rubber or other plastics resins in order to improve the comfort of the rider sits on the saddle. An improvement was considered when the frame of the saddle was suggested to be made from spring steel or it holds springs which act as shock absorbers.

It is an object of the present invention to provide a new type of saddle for bicycle. It is another object of the present invention to provide a new type of saddle for bicycle which eliminates the drawback of the known saddle as mentioned above. Thus the invention consists in a new type of saddle for bicycle comprising two spaced saddle parts, each part being adapted to swing independently of the other, around a transverse axis in accordance with the movement of the pelvis and the hip joints. In this manner there is a substantially separation of the movements of each leg, thus decreasing the stresses exerted on the muscles of the anal region.

The transverse axis around which the two parts can swing is generally constituted by the arms of a tubular T-shaped connector member whose vertical member is inserted into the bicycle original frame.

The present invention is illustrated, by way of example only, in the accompanying drawings which include preferred embodiments in order to better understand the scope of the invention without being limited thereto.

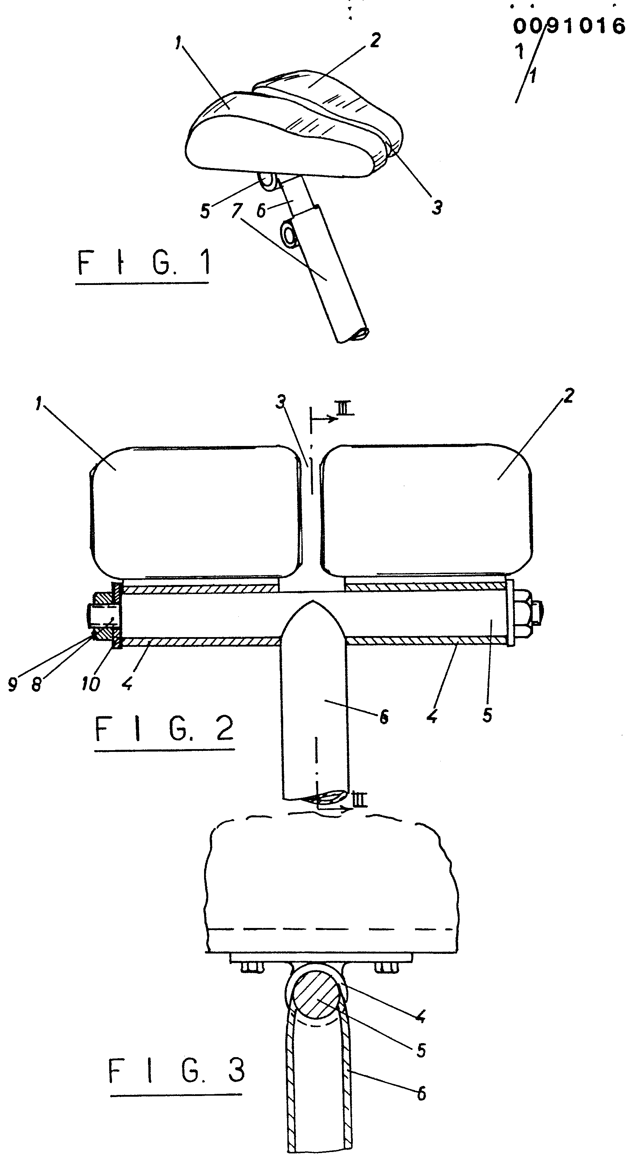

Figure 1 shows a perspective view of the bicycle frame according to the invention,

Figure 2 is an elevational section thereof,

Figure 3 is a section thereof taken on line III-III of Figure 2.

The bicycle saddle here illustrated comprises two upholstered saddle parts 1 and 2, which together would form a saddle of substantially conventional shape. According to a preferred embodiment the two parts are arranged symmetrically around the median longitudinal frame and are spaced from each other by a space 3. On the underside, each part is provided with a fixed shackle or sleeve 4 which is rotatable on the arms 5 of a tubular connector member 6 whose vertical member is inserted, as with conventional saddles, into the bicycle original frame 7.

The sleeves 4 are held on arms 5 in that their ends are provided with a threaded bolt 8 on which a nut 9 is threaded with the interposition of a washer 10. Each saddle part 1 and 2 is rotatable around arms 5 independently of each other and in accordance with the movement of the pelvis and the leg of the bicycle rider.

If desired, stops may be provided to limit the rotary movement within reasonable limits and to prevent free rotation of the saddle parts. The space 3 may be increased in accordance with requirements by the adjustment of nut 9 on bolt 8.

If desired, other means may be provided for movably attaching the saddle parts 1 and 2 onto the arms 5. For example, it is possible to provide high upholstered saddle parts with through-going bushings through which the arms 5 may extend, suitable stops being provided.

Various embodiments can be conceived based on some modifications to the description of the drawings as given above. Thus, there is not absolute requirement that the two parts of saddle should be identical. On the contrary, for handicapped persons such as those suffering on one of the legs it may be even desirable, to give a different shape or size to the respective part of the saddle, in order to provide and maintain the maximum possible balance in use of both legs. Also the upholstery of each saddle part can also be selected from any known material generally used for this purpose.

The saddle according to the present invention can be attached to any existing bicycle, used for riding, therapy or ergometry. This feature is an important economical advantage since any bicycle factory could incorporate the new saddle without changing its production line.

It will be understood that the above description is not intended to limit the invention to these particular embodiments. On the contrary it is intended to cover all alternatives, modifications and equivalents as may be included within the scope of the invention as defined by the following Claims.

**0091016**

C L A I M S :-

1.      A new type of saddle for bicycle comprising two spaced saddle parts (1,2) each part being adapted to swing independently of the other around a transverse axis in accordance with the movement of the pelvis and the hip joints.

2.      A new type of saddle for bicycle according to Claim 1, wherein the two spaced saddle parts(1,2) are symmetrically arranged around the median longitudinal plane.

3.      A new type of saddle for bicycle according to Claims 1 or 2, wherein said two spaced parts are substantially identical.

4.      A new type of saddle for bicycle according to Claim 1, wherein said transverse axis is constituted by the arms(5) of a tubular T-shaped connector(6) member whose vertical member is inserted in the bicycle frame(7).

5.      A new type of saddle for bicycle as claimed in Claim 4, wherein the arms(5) of said T-shaped connector(6) extend through transverse bushings provided in said saddle parts.

6.      A new type of saddle for bicycle as claimed in Claim 4, wherein said saddle parts are provided with shackles(4) at their underside adapted to rotate on the arms(5) of said T-shaped connector (6).

7.      A new type of saddle for bicycle as claimed in any of the preceding Claims, wherein means are provided to adjust the space(3) between said saddle parts(1,2).

8.      A new type of saddle for bicycle as claimed in any preceding Claim, wherein stop means are provided to limit the swinging movement.

0091016

F I G. 1

F I G. 2

F I G. 3